# EUROPÄISCHE PATENTANMELDUNG

(11) **EP 2 695 558 A1**
(43) Veröffentlichungstag der Anmeldung: **12.02.2014**
(21) Anmeldenummer: 13179224.4
(22) Anmeldetag: 05.08.2013
(51) Int. Cl.: A47J 31/44

(54) **Kaffeevollautomat mit Milchschäumeinrichtung**

(30) Priorität: 08.08.2012 DE 102012214105
(71) Anmelder: BSH Bosch und Siemens Hausgeräte GmbH, 81739 München (DE)
(72) Erfinder: Knauer, Joachim, 80807 München (DE); Strobl, Robert, 83246 Unterwössen (DE); van den Woldenberg, Anja, 89518 Heidenheim (DE)

(57) **Zusammenfassung**

Die vorliegende Erfindung betrifft einen Kaffeevollautomaten (1) mit einer Milchschaumdüse (2) zur Erzeugung von erhitzter Milch und/oder Milchschaum, der Leitungen für Milch (10), Dampf und/oder Heißwasser (11) sowie Luft (19) umfasst. Wesentlich ist dabei, dass die Luftleitung (19) über ein Sperrventil (22) an einer ersten Mündung (20) in die Milchleitung (10) mündet.

## Beschreibung

Die Erfindung betrifft einen Kaffeevollautomaten mit einer Milchschaumdüse zur Erzeugung von erhitzter Milch und/oder Milchschaum, mit einer Milchleitung zur Zufuhr von Milch aus einem Milchvorratsbehälter zur Milchschaumdüse, mit einer Dampfleitung, die eine Einrichtung zur Erzeugung von Dampf und/oder Heißwasser und die Milchschaumdüse verbindet.

Die EP 2 277 419 A1 offenbart einen Getränkeautomaten mit einer Einrichtung zum Erzeugen von Milchschaum und/oder erhitzter Milch, wobei die Einrichtung zumindest einen Milchzuführkanal und einen Dampfzuführkanal aufweist, die in einen Misch-/Schäumbereich münden. Wesentlich ist dabei, dass ein Leitungselement vorgesehen ist, welches einen Ends im Bereich einer Koppelstelle kommunizierend mit dem Milchzuführkanal und anderen Ends mit einem Behälter für Milch verbindbar ist und dass eine Spülleitung vorgesehen ist, welche die Reinigung mindestens der Milch führenden Teile außerhalb des Behälters ermöglicht.

Der Erfindung liegt die Aufgabe zugrunde, die Bedienung eines Kaffeevollautomaten hinsichtlich einer Erzeugung von Milchschaum und/oder erhitzter Milch zu verbessern und zu vereinfachen.

Die Aufgabe wird durch einen Kaffeevollautomaten gemäß Oberbegriff mit den in Anspruch 1 angegebenen Merkmalen gelöst. Der eingangs genannte Kaffeevollautomat wird dazu erfindungsgemäß dadurch weitergebildet, dass eine Luftleitung an einer ersten Mündung in die Milchleitung mündet. Die Erfindung wendet sich also davon ab, die Luftzufuhr unmittelbar in eine oder kurz vor einer Mischkammer im Bereich der Milchschaumdüse münden zu lassen. Sie verfolgt vielmehr das Prinzip, die Luftleitung außerhalb der Milchschaumdüse in die Milchleitung einmünden zu lassen, so dass stromab der ersten Mündung die Milchleitung und die Luftleitung zusammenfallen. Dadurch wird die Milchschaumdüse funktional und konstruktiv entlastet, wodurch sich ihr Aufbau und damit ihre Reinigung vereinfachen.

Regelmäßig ist der Mündungsbereich einer kombinierten Milch- und Luftleitung sowie einer Dampfleitung in der Milchschaumdüse als Venturigeometrie ausgebildet. Ein Dampfstrom in der Dampfleitung erzeugt einen Unterdruck in der einmündenden Milch- und Luftleitung, wodurch Milch und/oder Luft stromab der ersten Mündung gemeinsam in Richtung der Milchschaumdüse angesaugt werden und eine Vermischung mit Dampf stattfindet.

Nach einer bevorzugten Ausgestaltungsform kann der Kaffeevollautomat in der Luftleitung ein Sperrventil umfassen. Es kann für die Steuerung der Luftzufuhr ansteuerbar sein und jedenfalls zwischen einem geschlossenen Zustand für den Bezug heißer Milch und einem geöffneten Zustand für die Zubereitung von Milchschaum umschaltbar sein. Das Sperrventil kann grundsätzlich an einer beliebigen Stelle in der Luftleitung angeordnet sein. Vorzugsweise ist es direkt an der Mündung der Luftleitung in die Milchleitung positioniert, wo es zugleich ein Eindringen von Milch in die Luftleitung und damit einen zusätzlichen Reinigungsbedarf verhindern kann.

Da eine Vermischung von Milch und Luft bereits in der Milchleitung stattfinden kann, kann sich die Anordnung einer Vormischkammer erübrigen. Vorzugsweise ist die Luftleitung stromauf der ersten Mündung mit einer Spülleitung identisch. Dies bietet den Vorteil einer gleichzeitigen Reinigung der Luftleitung, wenn die Milchleitung mit einem Spülfluid aus der Spülleitung gespült wird. Damit kann ein hygienischer Betrieb des Kaffeevollautomaten auch für den Fall sichergestellt werden, dass bei einer etwaigen Undichtigkeit des Sperrventils Milch in die Luftleitung eindringt.

Nach einer weiteren bevorzugten Ausführungsform des Kaffeevollautomaten kann er in der Milchleitung stromab der ersten Mündung ein Durchflussbegrenzungsmittel umfassen. Das Durchflussbegrenzungsmittel kann beispielsweise als Lochblende oder Drossel, nämlich als sog. Reduzierstück ausgebildet sein und einen starren Wechsel von unterschiedlichen Innendurchmessern bzw. Innenquerschnitten der Milchleitung darstellen. Es definiert und verringert damit den Durchstrom der Milchleitung stromab der ersten Mündung gegenüber demjenigen stromauf der ersten Mündung, ohne aber das Mischungsverhältnis zwischen der Luft und der Milch zu verändern. Die Vorrichtung kann grundsätzlich an einer beliebigen Stelle in der Milchleitung stromab der ersten Mündung angeordnet sein. Das separate Durchflussbegrenzungsmittel bietet den Vorteil, dass das angesaugte Volumen von Milch und/oder Luft im Verhältnis zum Dampfstrom gegenüber einer Leitung ohne Durchflussbegrenzungsmittel genau eingestellt und ggf. nachträglich verändert werden kann. Denn durch den unmittelbaren Zusammenhang von Dampfstrom und der Ansaugung von Milch und/oder Luft in der Milchschaumdüse kann der Anteil des Dampfvolumens genau angepasst werden. Dies kann z.B. eine höhere Temperatur des ausgegebenen Milchschaums oder der erhitzten Milch bewirken, ohne die Milchschaumqualität insbesondere hinsichtlich der Blasengröße zu beeinträchtigen.

Vorzugsweise kann der erfindungsgemäße Kaffeevollautomat ein verstellbares Drosselventil als Durchflussbegrenzungsmittel aufweisen. Gegenüber dem starren Durchflussbegrenzungsmittel bietet das verstellbare Drosselventil den Vorteil eines variablen Innenquerschnitts, der beispielsweise auf einen bestimmten Betriebszustand des Kaffeevollautomaten einstellbar ist. Vorzugsweise umfasst die Verstellung des Innenquerschnitts der Milchleitung mehrere Positionen, die einerseits beispielsweise zumindest auf die Milchschaumerzeugung und andererseits auf die Einleitung von Spülfluid in die Milchleitung abgestimmt sind. Durch mehrere Verstellpositionen des Drosselventils bei der Milch- oder Milchschaumerzeugung kann das angesaugte Volumen des Milch-Luftgemisches bzw. der Milch variiert werden. Da die Dampfmenge davon unberührt, also gleich bleibt, können unterschiedliche Temperaturen von Milchschaum und/oder erhitzter Milch erzielt werden. Auch dabei leidet die Qualität insbesondere des erzeugten Milchschaums nicht, weil das Mischungsverhältnis zwischen Milch und Luft an sich unverändert bleibt.

Das System kann darauf ausgelegt sein, dass es bei einer maximalen Öffnung des Drosselventils eine definierte untere Temperaturgrenze und bei einer minimalen Öffnung eine definierte obere Temperaturgrenze eines Milchprodukts erreicht. Nach einer weiteren vorteilhaften Ausgestaltung kann der Kaffeevollautomat eine Temperaturmesseinrichtung zur Erfassung der Milchtemperatur und eine Steuereinrichtung zur Verstellung des Drosselventils in Abhängigkeit von einer Temperaturmessung der Temperaturmesseinrichtung umfassen. Die Temperaturmesseinrichtung kann prinzipiell an einer beliebigen Stelle in der Milchleitung oder im Milchvorratsbehälter angeordnet sein. Vorzugsweise ist sie in einem Abschnitt der Milchleitung angebracht, der nicht entnehmbar ist, so dass eine elektrische Kontaktierung zwischen Temperaturmesseinrichtung und dem Kaffeevollautomaten z.B. bei Reinigungstätigkeiten des Benutzers nicht beeinträchtigt werden kann. Einflüsse der Milchtemperatur, z.B. durch die Verwendung von Milch mit Raumtemperatur an Stelle von gekühlter Milch, können dadurch vorteilhafterweise ausgeglichen werden.

Das verstellbare Drosselventil kann vorzugsweise als Schlauchquetschventil ausgebildet sein. Eine Verstellung des Innenquerschnitts kann ein Stellglied leisten, welches einen flexiblen Schlauchabschnitt der Milchleitung von seiner Außenseite her zusammendrückt, ohne selbst mit der Milch in Berührung zu kommen. Dadurch kommt das Stellglied nicht mit der Milch in Berührung und kann nicht verschmutzen. Das verstellbare Drosselventil kann außerdem eine weitere Position bieten, die eine vollständige Sperrung der Milchleitung bewirkt. Diese geschlossene Position ist einerseits vorteilhaft, als bei einer Aktivierung des Dampf- und/oder Heißwasserstrahls in der Dampfleitung keine Gefahr besteht, unerwünscht Milch in Richtung der Milchschaumdüse anzusaugen. Andererseits kann dadurch beispielsweise der Abschnitt der Milchleitung auf Seiten des Milchvorratsbehälters separat gereinigt werden. Ein verstellbares Drosselventil kann damit auf rein mechanischem Weg, d.h. über eine Steuerung des zugeführten Dampfvolumens, eine Steuerung der Temperatur des ausgegebenen Milchschaums oder der erhitzten Milch erlauben. Die Erfindung wendet sich damit von den bisher praktizierten Methoden einer Variierung des Luft- oder Milchvolumens ab, die das Milch-Luftverhältnis ändern und damit die Milchschaumqualität beeinträchtigen. Die erfinderisch erzielte Unabhängigkeit von Temperaturregelung einerseits und der guten Qualität des Milchschaums andererseits, d.h. seiner Feinporigkeit und Festigkeit, empfindet der Benutzer dagegen als besonders angenehm.

Gemäß einer weiteren vorteilhaften Ausgestaltung kann der Kaffeevollautomat eine durch einen Benutzer betätigbare Einrichtung zur Verstellung des Durchflussbegrenzungsmittels umfassen. Die Einrichtung kann als mechanische und/oder elektronische Benutzerschnittstelle auf das Stellglied zur Verstellung des Innenquerschnitts des Durchflussbegrenzungsmittels wirken. Die Benutzerschnittstelle kann beispielsweise als Drehregler oder als Teil eines digitalen Interface ausgebildet sein. Der Benutzer kann dadurch komfortabel über Verstellung des Durchflussbegrenzungsmittels eine gewünschte Ausgabetemperatur des Milchschaums einstellen.

Nach einer weiteren bevorzugten Ausführungsform des Kaffeevollautomaten kann er eine Vorrichtung zur Begrenzung der Durchflussmenge in der Milchleitung stromauf der ersten Mündung umfassen. Sie wird ausführlich in der parallelen Anmeldung mit der Nr. 201201750 des Anmelders beschrieben, die diesbezüglich zum Inhalt der vorliegenden Anmeldung gemacht wird, und dient der Definition des maximalen Milchdurchflusses, der aus dem Milchvorratsbehälter angesaugt werden kann. Die Vorrichtung zur Begrenzung der Durchflussmenge in der Milchleitung zeichnet sich vorzugsweise durch Verstellbarkeit aus. Sie kann dazu als Drosselventil ausgebildet sein, das einen variablen Innenquerschnitt aufweist. Dazu eignet sich beispielsweise ein Schlauchquetschventil, das durch ein Stellglied verstellt werden kann. Vorzugsweise umfasst eine derartige Verstellung der Vorrichtung mindestens zwei Positionen, die einerseits auf die Erzeugung eines Unterdrucks in der Milchschaumdüse zur Erzeugung des gewünschten Milchschaums, und andererseits auf die Einleitung von Spülfluid in die Milchleitung abgestimmt sind. Im Abgleich mit einem jeweiligen Innenquerschnitt des Durchflussbegrenzungsmittels kann der Innenquerschnitt bzw. Innendurchmesser der Vorrichtung vorteilhafterweise eine Dimension aufweisen, welche bei Erzeugung eines Unterdrucks in der Milchleitung ein geeignetes Volumenverhältnis von angesaugter Milch zu Luft von etwa 1:1 herstellt. Daneben kann die Vorrichtung in einer weiteren bevorzugten Verstellposition ihres Innenquerschnitts den Volumenstrom eines Spülfluids stromab : stromauf der Vorrichtung in einem Verhältnis von 3:1 teilen. Bei einem Fehlen eines Durchflussbegrenzungsmittels in der Milchleitung stromab der ersten Mündung ist das Verhältnis des Querschnitts der Vorrichtung vorzugsweise auf den Leitungsquerschnitt der Milchleitung stromab der ersten Mündung abgestimmt. Das verstellbare Durchflussbegrenzungsmittel kann außerdem eine weitere Position bieten, die zum Beispiel zu einer vollständigen Sperrung der Milchleitung führen kann.

Der Kaffeevollautomat kann eine Schalteinrichtung jedenfalls für die Dampfleitung umfassen, die als Mehrfachventil, z.B. als Keramikscheibenventil, ausgebildet ist, um wahlweise Dampf oder Heißwasser aus der Heizung zur Milchschaumdüse zu leiten. Nach einer weiteren vorteilhaften Ausgestaltung der Erfindung kann auch die Luftleitung durch die Schalteinrichtung aktiviert oder deaktiviert werden. Damit kann eine Funktion des Sperrventils entfallen und auf die Schalteinrichtung übertragen werden, nämlich die aktive Ansteuerung des Sperrventils zum Öffnen für einen Luftzugang zur Milchschaumdüse beim Milchschäumen. An der Schalteinrichtung liegen Dampf und Heißwasser an, den bzw. das sie gemäß einer bevorzugten Ausführungsform wahlweise in die Dampf- oder Luftleitung leiten kann. Die Luftleitung dient dann als Fluidleitung zum vorzugsweise alternativen Transport von Luft oder Spülfluid. Die Fluidleitung kann entsprechend ohne eine Gabelung oder Verzweigung eine direkte Verbindung zwischen Schalteinrichtung und Milchleitung bilden. Demgemäß kann die Schalteinrichtung in einer ersten Schaltstellung die Fluidleitung in der Funktion einer Luftleitung mit einem Lufteingang verbinden und in einer zweiten Schaltstellung die Fluidleitung in der Funktion einer Spülleitung mit der Einrichtung zur Erzeugung von Dampf und/oder Heißwasser verbinden.

Da demnach nicht mehr das Sperrventil, sondern die Schalteinrichtung die Luftzufuhr über die Luftleitung steuert, braucht das Sperrventil diese Funktion nicht mehr zu übernehmen. Nach einer weiteren vorteilhaften Ausgestaltung der Erfindung kann das Sperrventil in der Luftleitung als selbsttätiges, also nicht angesteuertes Einrichtungs-, Schnabel-, oder Lippenventil ausgebildet sein, das lediglich einen Passage der Luft in einer Richtung zur Milchschaumdüse hin zulässt, in einer Gegenrichtung dagegen vor allem keine Milch in die Luftleitung eindringen lässt. Auch dazu wird ergänzend auf die parallele Anmeldung mit der Nr. 201201750 des Anmelders verwiesen, die diesbezüglich zum Inhalt der vorliegenden Anmeldung gemacht wird.

Nach einer weiteren bevorzugten Ausführungsform des Kaffeevollautomaten können die erste Mündung sowie ein anschließender Abschnitt der Luftleitung und ein beidseitig anschließender Abschnitt der Milchleitung an der ersten Mündung gemeinsam in einem kompakten Bauteil beispielsweise als T-Stück ausgebildet sein. Der Einfachheit halber im Folgenden als T-Stück bezeichnet, kann es das Durchflussbegrenzungsmittel stromab der ersten Mündung und/oder die Vorrichtung zur Begrenzung der Durchflussmenge stromauf der ersten Mündung umfassen sowie vorteilhafterweise das Sperrventil. Das T-Stück kann entnehmbar und zerlegbar ausgebildet sein, so dass es samt seiner mechanischen Bestandteile bequem und zuverlässig gereinigt werden kann. Für weitere Einzelheiten dazu wird auf die ausführliche Beschreibung in der parallelen Anmeldung mit der Nr. 201201750 des Anmelders verwiesen, die auch diesbezüglich zum Inhalt der vorliegenden Anmeldung gemacht wird.

Das Prinzip der Erfindung wird im Folgenden anhand einer Zeichnung beispielshalber noch näher erläutert. Die einzige Zeichnung zeigt einen schematischen Ausschnitt eines vereinfachten Schaltbilds eines Kaffeevollautomaten.

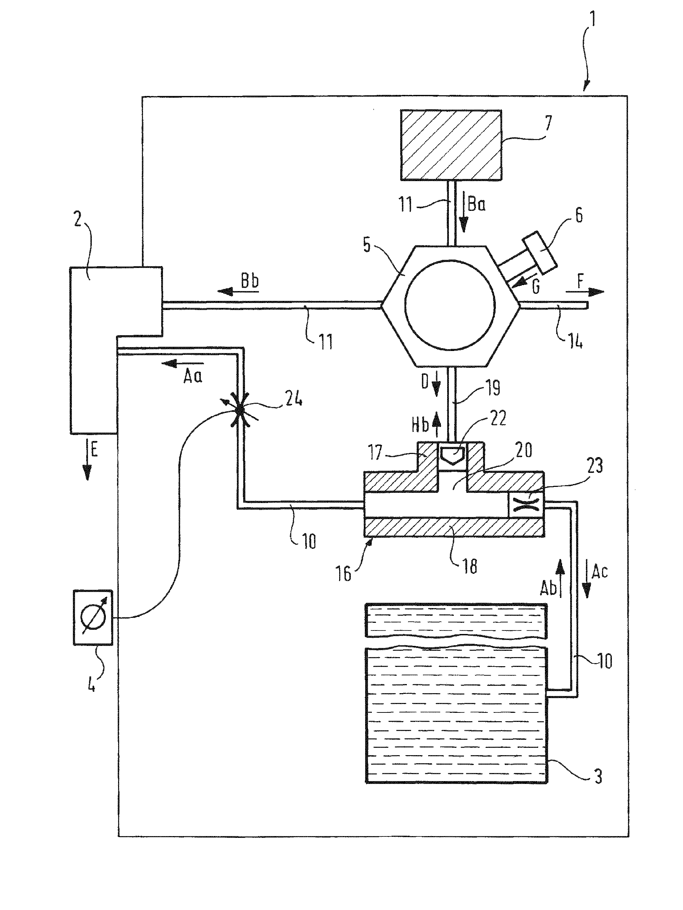

In der Figur 1 ist ein Kaffeevollautomat 1 mit einer Milchschaumdüse 2, einem Milchvorratsbehälter 3, einem Mehrfachventil 5 als einer Schalteinrichtung, einem Lufteingang 6 sowie einer Heizung 7 als einer Einrichtung zur Erzeugung von Dampf und/oder Heißwasser gezeigt. Eine Dampfleitung 11 verbindet die Heizung 7 mit dem Mehrfachventil 5 und jenes mit der Milchschaumdüse 2. Außerdem sind eine Drainageleitung 14 sowie der Lufteingang 6 an das Mehrfachventil 5 angeschlossen. Eine Milchleitung 10 verbindet den Milchvorratsbehälter 3 mit der Milchschaumdüse 2, wobei die Milch in einer hauptsächlichen Flussrichtung Ab, Aa in der Milchleitung 10 in Richtung der Milchschaumdüse 2 strömt. Eine Fluidleitung 19 zum Transport von Luft oder Spülfluid führt vom Mehrfachventil 5 zu einer ersten Mündung 20 und verbindet das Mehrfachventil 5 mit der Milchleitung 10. Damit stellt das Mehrfachventil 5 ein Verbindungselement der verschiedenen daran angeschlossenen Fluidleitungen 11, 14, 19 dar. Es kann einzelne, aber auch mehrere Leitungsverbindungen gleichzeitig öffnen und/oder schließen. Lediglich die Milchleitung 10 schließt nicht direkt an das Mehrfachventil 5 an.

Ein Segment 17 der Fluidleitung 19 und ein Segment 18 der Milchleitung 10 an der ersten Mündung 20 bilden gemeinsam ein einstückiges T-Stück 16. Das T-Stück 16 ist an zwei Enden in die Milchleitung 10 eingesteckt und an einem dritten Ende an die Fluidleitung 19 angesteckt.

Im Segment 18 ist in einem Bereich, der in eine Richtung stromaufwärts zum Milchvorratsbehälter 3 weist, eine Drossel 23 angebracht. Sie reduziert den Durchfluss der Milchleitung 10 stromauf der ersten Mündung 20 auf ein Drittel des Durchflusses der Milchleitung 10 stromab der ersten Mündung 20. Die Durchflüsse der Milchleitung 10 stromauf zu stromab der ersten Mündung verhalten sich damit wie 1: 3. Zusammen mit dem Durchfluss der Fluidleitung 19 definiert die Drossel 23 das Mischungsverhältnis von Luft und Milch im T-Stück 16.

Im Segment 17 ist ein Schnabelventil 22 angebracht. Es stellt ein Einrichtungsventil dar, das einen unterdruckgetriebenen Luftstrom in Richtung D passieren lässt, wohingegen es insbesondere einen Milchfluss in der Gegenrichtung Hb blockiert.

Die Milchleitung 10 enthält in einem Abschnitt stromabwärts der ersten Mündung 20 ein Drosselventil 24, welches mit einer an der Außenseite des Kaffeevollautomaten 1 angeordneten Stelleinrichtung 4 verbunden ist. Die Stelleinrichtung 4 erlaubt einem Benutzer eine Veränderung der Durchflussmenge durch Verstellen des Drosselventils 24. Auch das Drosselventil 24 kann im Segment 18, und zwar stromab der ersten Mündung 20 angeordnet sein, so dass das demontierbare T-Stück 16 sehr kompakt ausfallen kann.

Im Betrieb des Kaffeevollautomaten 1 schaltet das Mehrfachventil 5 zur Erzeugung von Milchschaum in Flussrichtung E mittels der Milchschaumdüse 2 einen Dampfstrom von der Heizung 7 in Flussrichtung Ba, Bb zur Milchschaumdüse 2 frei. Gleichzeitig stellt es eine Verbindung zwischen dem Lufteingang 6 und der Fluidleitung 19 her. Alle anderen Verbindungen sind zu diesem Zeitpunkt geschlossen. Die Milchleitung 10 und die Dampfleitung 11 fließen in der Milchschaumdüse 2 zusammen, die eine Venturi-Geometrie aufweist. So erzeugt der Dampfstrom in Flussrichtung Ba, Bb einen Unterdruck in der Milchleitung 10. Der Unterdruck führt zum Ansaugen sowohl von Milch im Milchvorratsbehälter 3 in Flussrichtung Ab, Aa als auch von Luft am Lufteingang 6 in Flussrichtung G, C, Ha, Aa. Die Luft passiert das Schnabelventil 22, das sich bei Unterdruck öffnet. Milch und Luft vermischen sich in der Milchleitung 10 stromabwärts der ersten Mündung 22 und werden in der Milchschaumdüse 2 aufgeschäumt und durch Dampf erhitzt, wodurch Milchschaum entsteht. Der Volumenanteil angesaugter Luft und der Volumenanteil angesaugter Milch stehen dabei in einem günstigen Verhältnis von circa 1:1, das einen feinblasigen Milchschaum begünstigt.

Der Benutzer kann an der Stelleinrichtung 4 den Innenquerschnitt des Drosselventils 24 verstellen und damit den Grad der Drosselung des Milch-Luft-Gemischs bestimmen. Die Drosselung des Milch-Luft-Gemischs wirkt sich bei gleich bleibendem Dampfvolumen direkt auf die Ausgabetemperatur des Milchschaums aus. Dessen Temperatur steigt. Umgekehrt kann durch Öffnen des Drosselventils 24 die Temperatur des Milchschaums reduziert werden. Die Ausgabetemperatur lässt sich in einem günstigen Bereich zwischen etwa 58°C und etwa 75°C einstellen. Diese Temperaturdifferenz entspricht einer Drosselung des Milch-LuftGemischs von etwa 30%. Das Mischungsverhältnis von Milch zu Luft bleibt dabei aber unangetastet und behält sein günstiges Verhältnis von 1:1. Eine Temperaturverstellung an der Stelleinrichtung 4 beeinträchtigt folglich nicht die Qualität des Milchschaums.

Zur Erzeugung von heißer Milch in Flussrichtung E mittels der Milchschaumdüse 2 gibt das Mehrfachventil 5 einen Strom von Dampf aus der Heizung 7 in Flussrichtung Ba, Bb zur Milchschaumdüse 2 frei. Alle anderen Verbindungen schließt es. Der Dampfstrom ruft in der Milchschaumdüse 2 einen Unterdruck hervor, der Milch aus dem Milchvorratsbehälter 3 in Flussrichtung Aa, Ab in die Milchschaumdüse 2 saugt. Die Erhitzung der Milch durch Dampf in der Milchschaumdüse 2 resultiert in heißer Milch. Auch dabei kann der Benutzer an der Stelleinrichtung 4 die Temperatur in der oben beschriebenen Weise verstellen.

Überflüssiges Fluid nach einer Beaufschlagung der Fluidleitungen 11, 19 mit Dampf oder Heißwasser wird bei einer entsprechenden Schaltstellung des Mehrfachventils 5 durch die Drainageleitung 14 in Flussrichtung F abgeführt.

Bei geringfügigen Undichtigkeiten und Druckschwankungen kann Milch aus der Milchleitung 10 durch das Schnabelventil 22 in Flussrichtung Hb in die Fluidleitung 19 eindringen. Da abhängig von der jeweiligen Schaltstellung des Mehrfachventils 5 die Fluidleitung 19 alternativ Spülfluid oder Luft in der Flussrichtung D transportiert, wird Milch, die in Flussrichtung Hb durch ein ggf. schadhaftes Schnabelventil 22 in die Fluidleitung 19 eindringt, bei einem Spülvorgang mit Dampf und/oder Heißwasser ausgespült.

Da es sich bei den vorhergehenden, detailliert beschriebenen Kaffeevollautomaten um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Fluidleitungsverläufe in anderer Form als in der hier beschriebenen erfolgen. Ebenso kann das T-Stück in einer anderen Form, z.B. in einer L- oder Y-Form, ausgestaltet sein, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Kaffeevollautomat
- 2: Milchschaumdüse
- 3: Milchvorratsbehälter
- 4: Stelleinrichtung
- 5: Mehrfachventil
- 6: Lufteingang
- 7: Heizung
- 10: Milchleitung
- 11: Dampfleitung
- 14: Drainageleitung
- 16: T-Stück
- 17: Abschnitt der Fluidleitung 19
- 18: Abschnitt der Milchleitung 10
- 19: Fluidleitung
- 20: Erste Mündung
- 22: Schnabelventil
- 23: Drossel
- 24: Drosselventil

- Aa: Flussrichtung Milchleitungsabschnitt
- Ab: Flussrichtung Milchleitungsabschnitt
- Ac: Flussrichtung Milchleitungsabschnitt
- Ba: Flussrichtung Dampfleitungsabschnitt
- Bb: Flussrichtung Dampfleitungsabschnitt
- D: Flussrichtung Fluidleitung
- E: Flussrichtung Milchschaum/Heißmilch
- F: Flussrichtung Drainageleitung
- G: Flussrichtung Lufteingang
- Ha: Flussrichtung Leitungsabschnitt
- Hb: Flussrichtung Leitungsabschnitt

## Patentansprüche

1. Kaffeevollautomat (1) mit
- einer Milchschaumdüse (2) zur Erzeugung von erhitzter Milch und/oder Milchschaum,
- einer Milchleitung (10) zur Zufuhr von Milch aus einem Milchvorratsbehälter (3) zur Milchschaumdüse (2),
- einer Dampfleitung (11), die eine Einrichtung (7) zur Erzeugung von Dampf und/oder
Heißwasser und die Milchschaumdüse (2) verbindet,
**gekennzeichnet durch**
eine Luftleitung (19), die an einer ersten Mündung (20) in die Milchleitung (10) mündet.

2. Kaffeevollautomat nach Anspruch 1, **gekennzeichnet durch** ein Durchflussbegrenzungsmittel (24) in der Milchleitung (10) stromab der ersten Mündung (20).

3. Kaffeevollautomat nach Anspruch 2, **gekennzeichnet durch** ein verstellbares Drosselventil als Durchflussbegrenzungsmittel (24).

4. Kaffeevollautomat nach Anspruch 3, **gekennzeichnet durch** eine Temperaturmesseinrichtung zur Erfassung der Milchtemperatur und eine Steuereinrichtung zur Verstellung des Durchflussbegrenzungsmittels (24) in Abhängigkeit von einer Temperaturmessung der Temperaturmesseinrichtung.

5. Kaffeevollautomat nach Anspruch 3 oder 4, **gekennzeichnet durch** eine benutzerbetätigbare Einrichtung (4) zur Verstellung des Durchflussbegrenzungsmittels (24).

6. Kaffeevollautomat nach einem der vorhergehenden Ansprüche, **gekennzeichnet durch** eine Vorrichtung (23) zur Begrenzung der Durchflussmenge in der Milchleitung (10) stromauf der ersten Mündung (20), vorzugsweise in der Nähe der ersten Mündung (20).

7. Kaffeevollautomat nach Anspruch 6, **dadurch gekennzeichnet, dass** die Vorrichtung (23) verstellbar ist.

8. Kaffeevollautomat nach einem der vorhergehenden Ansprüche, mit einem Sperrventil (22), **dadurch gekennzeichnet, dass** das Sperrventil (22) als Einrichtungs-, Schnabeloder Lippenventil ausgebildet ist.

9. Kaffeevollautomat nach einem der vorhergehenden Ansprüche, **gekennzeichnet durch** eine gemeinsame Schalteinrichtung (5) für die Dampfleitung (11) und die Luftleitung (19).

10. Kaffeevollautomat nach den Ansprüchen 6 bis 9, **dadurch gekennzeichnet, dass** ein Abschnitt der Luftleitung (17) und ein Abschnitt der Milchleitung (18) an der ersten Mündung (20) als einstückiges T-Stück (16) ausgebildet sind, welches das Durchflussbegrenzungsmittel (24) und/oder die Vorrichtung (23) umfasst.
